(19) Europäisches Patentamt / European Patent Office / Office européen des brevets

(11) **EP 2 410 352 A1**

(12) **DEMANDE DE BREVET EUROPEEN**

(43) Date de publication:
**25.01.2012 Bulletin 2012/04**

(51) Int Cl.:
*G01S 19/22* (2010.01)  *G01S 19/21* (2010.01)
*G01S 19/37* (2010.01)  *G01S 19/26* (2010.01)

(21) Numéro de dépôt: **11171967.0**

(22) Date de dépôt: **29.06.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **19.07.2010 FR 1003026**

(71) Demandeur: **Thales**
**92200 Neuilly Sur Seine (FR)**

(72) Inventeur: **Revol, Marc**
**26120 UPIC (FR)**

(74) Mandataire: **Brunelli, Gérald**
**Marks & Clerk France**
**Immeuble Visium**
**22, avenue Aristide Briand**
**94117 Arcueil Cedex (FR)**

(54) **Dispositif d'antenne à ouverture synthetique de reception de signaux d'un système comprenant une porteuse et des moyens de détermination de sa trajectoire**

(57) Dispositif d'antenne à ouverture synthétique de réception de signaux d'un système comprenant une porteuse et des moyens de détermination de sa trajectoire (301), comprenant, pour chaque signal respectivement associé à une direction spatiale, des moyens de traitement adaptés pour générer un signal à phase stationnaire sur une fenêtre temporelle correspondant à la distance parcourue par le dispositif pendant la durée d'intégration cohérente, après démodulation dudit signal reçu, lesdits moyens de traitement comprenant des moyens de correction (306, 307, 308, 309, 313) adaptés pour corriger la phase de porteuse dudit signal.

FIG.3

EP 2 410 352 A1

**Description**

L'invention porte sur un récepteur de signaux d'un système, destiné à améliorer la robustesse de fonctionnement en présence de sources de brouillages et d'interférences, ainsi que de trajets réfléchis des signaux.

Un système de navigation par satellites utilise une constellation de satellites qui tournent autour de la terre sur des orbites très précisément déterminées. Ainsi, il est possible de connaître à tout instant la position d'un satellite quelconque. Les orbites des satellites sont choisies de façon à ce qu'à toute heure, 6 à 12 satellites soient visibles en tout point de la terre. Chaque satellite émet plusieurs signaux radioélectriques de type de modulation et de fréquences déterminés. Au sol ou sur un véhicule terrien, maritime ou aérien, un récepteur reçoit les signaux émis par des satellites visibles.

Un récepteur de système de navigation par satellites embarqué mesure la durée de propagation requise pour qu'une marque horaire transmise par un satellite lui parvienne. Les marques horaires sont codées sur des ondes porteuses par la technique de modulation de phase. Chaque satellite transmet ainsi un ensemble de codes pseudo-aléatoires qui lui sont propres. Une réplique de la séquence du code est générée par le récepteur et le décalage que doit subir la réplique afin de coïncider avec le code reçu correspond à la durée de propagation du signal pour parcourir la distance satellite-récepteur. Cette durée multipliée par la vitesse de la lumière dans le milieu traversé donne une mesure de distance appelée pseudo-distance. A partir des mesures des pseudo-distances le séparant de chaque satellite visible, et de la connaissance de la position des satellites, le récepteur déduit sa position précise en latitude, longitude, et en altitude dans un repère terrestre par une résolution numérique voisine de la triangulation. A partir des mesures de phase (Doppler) des porteuses, et de la connaissance précise de la vitesse apparente des satellites, le récepteur calcule précisément la vitesse. Il peut également en déduire la date et l'heure précise dans le repère temporel du système de navigation par satellites.

La réception des signaux satellites et la précision des mesures reste très sensible, malgré l'élargissement des codes d'étalement et l'accroissement des puissances d'émission, à la présence de sources de brouillages et d'interférences, ainsi qu'à l'existence de trajets réfléchis.

Une voie d'amélioration de la robustesse des récepteurs passe par l'utilisation d'antennes réseaux. Ce domaine commence à se développer dans le cadre des récepteurs militaires de système de navigation par satellites (antenne CRPA numérique) et des stations au sol. Cependant, ces solutions imposent des tailles d'antennes contraignantes, et augmentent sensiblement la complexité matérielle pour les étages de radiofréquences RF du récepteur (autant de voies RF que d'éléments d'antenne) ainsi que la charge de calcul (inversion en temps réel de la matrice inter spectrale en fréquence intermédiaire).

Un but de l'invention est de limiter la complexité de telles antennes, en réduisant leur coût.

Selon un aspect de l'invention, il est proposé un dispositif d'antenne à ouverture synthétique de réception de signaux d'un système de navigation par satellites comprenant une porteuse et des moyens de détermination de sa trajectoire, ledit dispositif comprenant, pour chaque signal respectivement associé à une direction spatiale, des moyens de traitement adaptés pour générer un signal à phase stationnaire sur une fenêtre temporelle correspondant à la distance parcourue par le dispositif pendant la durée d'intégration cohérente, après démodulation dudit signal reçu, lesdits moyens de traitement comprenant des moyens de correction adaptés pour corriger la phase de porteuse dudit signal.

Un tel dispositif permet de limiter la complexité des antennes, en réduisant leur coût. En outre, le traitement d'antenne synthétique permet l'obtention de gains de directivité importants dans n'importe quelle direction visée, sans commune mesure avec ceux atteignables par des antennes réseaux du fait de l'encombrement et du nombre d'antennes élémentaires qui seraient alors nécessaires, permettant ainsi non seulement d'améliorer la sensibilité de réception sur les trajets directs depuis l'émetteur, mais permet aussi de détecter et d'isoler ses trajets réfléchis dans les autres directions. Du fait de la simplicité du traitement d'antenne synthétique proposé, il est possible de réaliser la poursuite simultanée pour leurs différentes directions d'arrivées des signaux directs, associés à chaque satellite, et des signaux réfléchis au sol.

Dans un mode de réalisation, lesdits moyens de correction comprennent, pour corriger la phase de porteuse dudit signal en phase d'acquisition ou en phase de poursuite :

- des premiers moyens de détermination d'un vecteur vitesse de déplacement du dispositif ;
- des moyens de projection orthogonale dudit vecteur vitesse de déplacement du dispositif dans la direction dudit signal ;
- un premier oscillateur à commande numérique recevant en entrée le ladite projection orthogonale ;
- un multiplicateur pour multiplier le signal délivré par ledit premier oscillateur à commande numérique et les composantes de bases complexes du signal reçu, obtenues après démodulation de la phase de porteuse ; et
- des premiers moyens d'intégration cohérente du signal délivré par ledit multiplicateur sur un intervalle de temps d'une durée T inférieur au temps de parcours par l'antenne de 100 longueurs d'onde de la fréquence de porteuse, et inférieure à un maximum de 10 seconde.

Un tel mode de réalisation permet de garder l'architecture classique de la boucle de poursuite d'un récepteur de système de navigation par satellites. La compensation de phase est réalisée à basse cadence après corrélation par le code local, en utilisant les mesures fournies par les boucles de code et de phase utilisées pour la poursuite des signaux des satellites, contrairement à des solutions plus complexes où la compensation est réalisée au niveau des étages RF (radio-fréquences) ou IF (fréquences intermédiaires).

Selon un mode de réalisation, le signal comprenant une phase de sous-porteuse, lesdits moyens de correction sont, en outre adaptés pour corriger la phase de sous-porteuse dudit signal.

Ainsi, il est possible de construire une antenne synthétique sur la base de la sous-porteuse du signal de modulation de type BOC dont la longueur d'onde plus importante permet de réaliser le traitement à un rythme plus faible ou d'autoriser des vitesses de déplacement du porteur plus importantes que dans le cas de la correction de porteuse.

Dans un mode de réalisation, la phase de sous porteuse comprenant une modulation des codes d'étalement de type BOC, lesdits moyens de correction comprennent :

- des moyens de démodulation complexe de la phase de sous-porteuse
- des deuxièmes moyens d'intégration courte du signal délivré par lesdits moyens de démodulation complexe servant à la mesure de la phase de porteuse ;
- des deuxièmes moyens de détermination d'une référence de trajectoire dudit dispositif pour déterminer l'évolution de la phase du signal reçu correspondant au seul déplacement dudit dispositif ;
- des moyens d'estimation du déplacement relatif du dispositif correspondant à la projection de la vitesse de déplacement du porteur dans la direction du signal reçu à partir de ladite référence de trajectoire dudit dispositif ;
- des premiers moyens de calcul d'une correction de phase de sous-porteuse du signal correspondant au déplacement relatif du porteur, asservi en temps sur le temps reçu ;
- des premiers moyens de multiplication pour effectuer la multiplication complexe du signal de sortie desdits deuxièmes moyens d'intégration courte et desdits premiers moyens de calcul de correction de phase de sous-porteuse ; et
- des troisièmes moyens d'intégration longue du signal délivré par lesdits deuxièmes moyens d'intégration courte servant à la mesure de la phase de sous-porteuse ;
- des moyens de mesure de la phase de sous-porteuse.

Ce traitement est particulièrement adapté au cas des nouveaux signaux de systèmes de navigation par satellites de type BOC ou AltBOC pour des porteurs du dispositif ayant des vitesses élevées. En ce cas particulier, la longueur apparente de l'antenne ramenée à la longueur d'onde de sous-porteuse est plus faible, ce qui conduit à des pinceaux de directivité plus larges (pour une même durée d'intégration cohérente) et donc à une meilleure stabilité des voies de réception.

Par exemple, lesdits moyens de démodulation complexe de la phase de sous-porteuse comprennent :

- un deuxième oscillateur à commande numérique pour générer le code de type BOC local asservi en temps sur le temps reçu ;
- des deuxièmes moyens de multiplication pour effectuer la multiplication complexe du signal reçu et du code de type BOC complexe généré en local.

Ainsi, on réalise une démodulation complexe de la sous-porteuse de la modulation BOC (ou AltBoc) dont on peut estimer directement la phase, représentative du retard du code BoC (ou AltBoc). Le signal de type BOC complexe vaut BOC_cos + j BOC_sin.

Selon un mode de réalisation, la phase de sous porteuse comprenant une modulation des codes d'étalement de type BOC, lesdits moyens de correction comprennent :

- des moyens de démodulation complexe de la phase de sous-porteuse
- des deuxièmes moyens d'intégration courte du signal délivré par ledit multiplicateur servant à la mesure de la phase de porteuse ;
- des deuxièmes moyens de détermination d'une référence de trajectoire dudit dispositif pour déterminer l'évolution de la phase du signal reçu correspondant au seul déplacement dudit dispositif ;
- des moyens d'estimation du déplacement relatif du dispositif correspondant à la projection de la vitesse de déplacement du porteur dans la direction du signal reçu à partir de ladite référence de trajectoire dudit dispositif ;
- des premiers moyens de calcul d'une correction de phase de sous-porteuse du signal correspondant au déplacement relatif du porteur, asservi en temps sur le temps reçu ;
- des troisièmes moyens de multiplication des signaux délivrés en sortie des deuxièmes moyens d'intégration courte et des premiers moyens de calcul ;
- des moyens de traitement adaptatif spatial pour effectuer un filtrage temporel du signal complexe démodulé, délivré en sortie desdits troisièmes moyens de multiplication, à partir desdites pondérations et de ladite mesure de phase de sous-porteuse ;

- des deuxièmes moyens de calcul de coefficients de pondération desdits moyens de traitement adaptatif spatial, appliqués à partir du signal délivré en sortie desdits troisièmes moyens de multiplication ; et
- des moyens de mesure de la phase de sous-porteuse du signal de sortie desdits moyens de traitement adaptatif spatial.

Le traitement adaptatif appliqué sur les échantillons temporels est équivalent à un traitement adaptatif spatial qui serait appliqué sur des éléments discrets d'antennes. Cela permet de conserver le gain de directivité dans les directions visées, tout en rejetant les sources d'interférences fortes situées dans les autres directions.

Selon un autre aspect de l'invention, il est également proposé un procédé de réception par antenne à ouverture synthétique de signaux d'un système de navigation par satellites comprenant une porteuse et des moyens de détermination de sa trajectoire, dans lequel, pour chaque signal respectivement associé à une direction spatiale, on effectue un traitement adapté pour générer un signal à phase stationnaire sur une fenêtre temporelle correspondant à la distance parcourue par le dispositif pendant la durée d'intégration cohérente, après démodulation dudit signal reçu, ledit traitement comprenant une correction de la phase de porteuse dudit signal.

Selon un mode de mise en oeuvre, ladite correction de la phase de porteuse dudit signal comprend, en phase d'acquisition ou en phase de poursuite :

- une détermination d'un vecteur vitesse de déplacement de ladite antenne ;
- une projection orthogonale dudit vecteur vitesse de déplacement dans la direction dudit signal ;
- une génération d'un signal de correction de la phase de la porteuse réalisée par un oscillateur numérique commandé en phase à partir de la vitesse de déplacement de l'antenne dans la direction du signal ;
- une multiplication dudit signal corrigé et du signal reçu en composantes de bases complexes, obtenu après démodulation de la phase de porteuse ; et
- une intégration cohérente du résultat de ladite multiplication sur un intervalle de temps d'une durée T inférieure au temps de parcours par l'antenne de 100 longueurs d'onde de la fréquence de porteuse, et inférieure à un maximum de 10 seconde.

Dans un mode de mise en oeuvre, le signal comprenant une phase de sous-porteuse, ladite correction est, en outre, adaptée pour corriger la phase de sous-porteuse dudit signal.

La correction de phase ainsi réalisée permet de compenser l'évolution de la phase du signal correspondant au mouvement du porteur dans la direction visée, la rendant alors équivalente à celle qui serait délivrée dans le cas d'un déplacement contenu dans un plan orthogonal à la direction visée, assurant ainsi la mise en cohérence des signaux qui arrivent dans la direction visée.

L'invention sera mieux comprise à l'étude de quelques modes de réalisation décrits à titre d'exemples nullement limitatifs et illustrés par les dessins annexés sur lesquels :

- la figure 1 illustre schématiquement l'effet de directivité simple ;
- la figure 2 illustre schématiquement le principe d'asservissement des boucles de poursuite de phase de code et de phase de porteuse ;
- la figure 3 illustre schématiquement un mode de réalisation de l'invention en acquisition cohérente sur porteuse simple ;
- la figure 4 illustre schématiquement un mode de réalisation de l'invention en poursuite cohérente sur porteuse simple ;
- la figures 5, illustre schématiquement un mode de réalisation de l'invention sur fréquence de sous-porteuse de type BOC ;
- la figure 6 illustre schématiquement un autre mode de réalisation sur fréquence de sous-porteuse de type BOC par traitement adaptatif.

Sur l'ensemble de figures, les éléments ayants les mêmes références sont similaires.

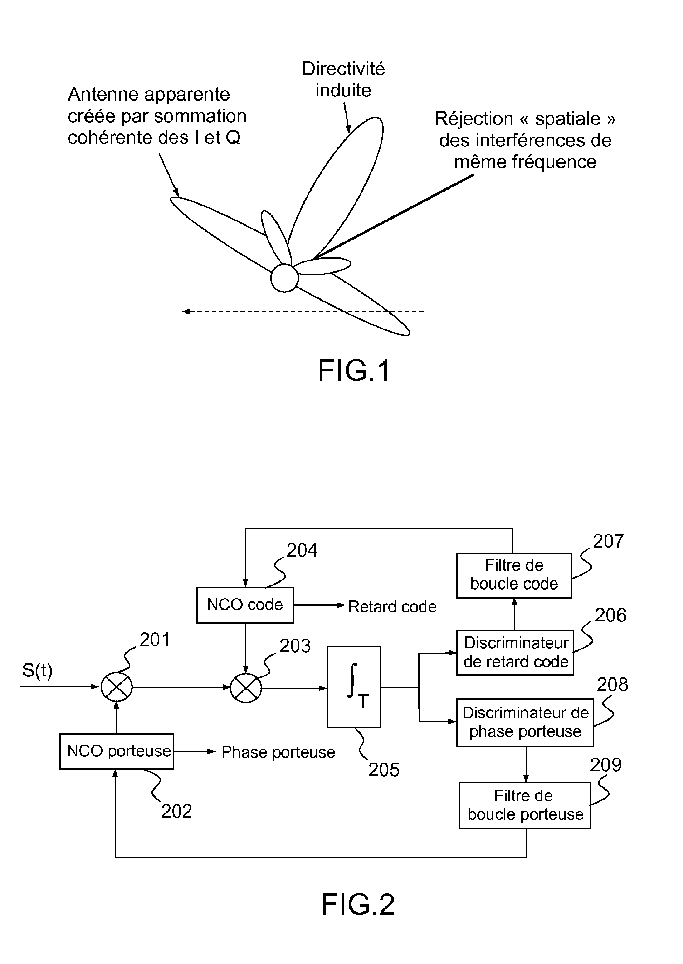

De manière générale, on parle d'"antenne synthétique",comme illustrée sur la figure 1, lorsqu'une ressource déficiente, comme un manque d'espace, ou une contrainte de fonctionnement, est remplacée par du temps. Ceci suppose une certaine stabilité spatiale de la scène : il peut s'agir d'une cohérence parfaite (SAR, SAS, Séismique ou Echographie), ou seulement d'une stationnarité spatiale au second ordre (synthèse d'ouverture en radioastronomie).

Les techniques synthétiques sont connues dans les domaines de la cartographie, du sondage ou de l'échographie.

En effet, l'antenne synthétique, est, à l'origine appliquée à la cartographie radar ou SAR pour "Synthetic Aperture Radar" en langue anglosaxonne, exploite le mouvement propre du véhicule portant l'antenne physique. Elle fabrique de manière artificielle ou simule une antenne de grande taille dont la géométrie correspond à l'espace couvert par l'antenne lors de son déplacement. Le contenu des documents "Communication with parametric array", de L. Kopp, IEEE Trans, Ocean Engineer, Jan. 2000, Antenne Synthétique Radar et Sonar, et "Synthetic Aperture Radars - a paradigm for technology evolution", de C.A. Wiley, 1985, IEEE AES-21 Trans, p 440-443, illustrent ces connaissances.

De manière similaire, ce principe a été utilisé, mais de façon plus tardive, pour la cartographie des fonds marins. Le problème du SAS pour Sonar à Antenne Synthétique, est compliqué par le contrôle de la navigation de la plateforme porteuse, comme illustré par le contenu des documents "Comparison of sonar system performance achievable using synthetic aperture techniques with the performance achievable by more conventional means" de L.J.Cutrona, Journal of the Acoustic Society of America, 1975, 58 (2), p 336-348, et "Special Issue on Acoustic Synthetic Aperture Processing", IEEE Ocean Engineering Trans. , Vol. 17 ,Jan 1992.

L'application au domaine de la navigation par satellites offre de nouveaux horizons du fait de la nécessité de répondre à la fois à des contraintes de limitation de la complexité des récepteurs de plus en plus intégrés, ainsi qu'au besoin d'assurer intégrité et continuité grandissante des mesures produites.

Dans le cas des signaux de système de navigation par satellites, le signal émis est maîtrisé en phase et en retard. Tout se passe comme si on disposait d'une antenne de réception dont la géométrie correspondrait à l'ensemble des positions occupées par l'antenne de réception. Il est ainsi possible de reconstituer le diagramme de réception a posteriori par sommation des signaux reçus aux différentes récurrences de prélèvement, en tenant compte du mouvement de l'émetteur.

Il est conceptuellement plus facile d'envisager une antenne synthétique en commençant par considérer le cas dans lequel l'émetteur est fixe et le récepteur mobile occupant des positions successives. Bien entendu, l'invention s'applique également au cas dans lequel le récepteur est fixe et l'émetteur mobile.

Considérons un transmetteur fixe et la suite $\{(r_n(t))\}$, (n variant de 1 à N) des signaux reçus sur l'antenne de réception à des instants successifs, auxquels le récepteur occupe des positions variables. Si on fait simplement la somme des signaux en question, cela est équivalent à fabriquer le signal qui serait effectivement reçu par ce même capteur lors d'une réception au même instant sur une antenne de N capteurs sur laquelle le signal serait appliqué simultanément à tous les émetteurs. Si les positions des capteurs sont distribuées sur une droite, l'opération précédente correspond à pointer l'antenne d'émission à l'infini orthogonalement au déplacement.

Il est, bien entendu, également possible d'appliquer des décalages de phase $\{\tau_n\}_{n=1,N}$ aux signaux précédents, ces déphasages pouvant être calculés de manière à orienter l'antenne virtuelle de réception dans la direction du satellite poursuivi (formation de voie). Cette possibilité d'orienter l'antenne en une position quelconque constitue l'intérêt principal de l'antenne synthétique.

Il reste quand même une différence entre une antenne synthétique et une vraie antenne : le bruit électronique pour chaque mesure est augmenté par rapport à ce qu'il serait si l'on disposait effectivement de l'antenne d'émission complète. En détection les pertes sont d'un rapport en $\sqrt{N}$.

Par ailleurs, pour mettre en oeuvre un tel traitement, il est nécessaire de connaître la trajectoire parcourue par l'antenne pendant la durée d'intégration cohérente, avec une précision meilleure que $\lambda/8$, $\lambda$ étant la longueur d'onde de la porteuse ou de la sous-porteuse.

Le traitement d'Antenne à Ouverture Synthétique Passif ou PSAA, distinct du traitement d'antenne synthétique actif ou ASAA utilisé en radar et en sonar, mais faisant appel au même principe physique, appliqué à la réception ou à l'émission des signaux d'un système de navigation par satellites, apporte une réponse à cette complexité. En effet, ce traitement peut être réalisé à partir d'une seule antenne élémentaire, ou d'une pluralité (antenne réseau) si elle est déjà disponible, et limite l'accroissement de complexité sur le matériel ou le traitement interne du récepteur. En outre, ce traitement fournit une solution robuste évitant toute forme de calibration ordinairement liée au traitement spatial à partir d'antennes élémentaires disposées en réseau. Il tire profit du déplacement connu du porteur, i.e. du dispositif lui-même (par exemple issu d'une orbitographie dans le cas d'un satellite, ou d'une référence inertielle ou odométrique, voire de référence cartographiques) et de la cohérence temporelle de la phase des signaux pour réaliser une antenne virtuelle.

En outre, le traitement d'antenne synthétique permet l'obtention de gains de directivité importants dans n'importe quelle direction visée, sans commune mesure avec ceux atteignables par des antennes réseaux du fait de l'encombrement et du nombre d'antennes élémentaires qui seraient alors nécessaires. Ainsi, il est non seulement possible d'améliorer la sensibilité de réception sur les trajets directs depuis l'émetteur, mais également de détecter et d'isoler ses trajets réfléchis dans les autres directions. Du fait de la simplicité du traitement d'antenne synthétique proposé, il est possible de réaliser la poursuite simultanément pour différentes directions d'arrivée des signaux directs associés à chaque satellite, et des signaux réfléchis, au sol.

L'utilisation simultanée des trajets directs et des trajets réfléchis offre alors de multiples avantages pour réaliser une navigation caractérisée par l'absence d'émissions actives :

- amélioration de la robustesse de la localisation à partir des signaux directs,
- navigation relative par rapport aux obstacles du sol caractérisés par des points brillants, facilitant l'autonomie de la navigation du mobile,

- utilisation des points brillants caractéristiques pour une navigation sur la carte, et détermination des distances relatives, et
- le système de localisation est entièrement passif.

L'hybridation serrée, connue et utilisée classiquement dans le cas des systèmes de navigation par satellites hybridés avec une référence inertielle, ne réalise que partiellement les fonctionnalités d'une antenne synthétique selon l'invention :

- l'hybridation serrée s'appuie uniquement sur les mesures issues des boucles de poursuite des récepteurs de type PLL pour extraire les mesures de phases. Elle ne permet de d'améliorer l'intégration cohérente que dans la direction du signal en cours de poursuite, initialisée et accrochée en phase d'acquisition sur le trajet principal.

- elle ne permet pas de contraindre l'orientation de l'intégration cohérente dans des directions différentes de celle du signal en poursuite correspondant en général au trajet direct,

- le couplage serré ne fonctionne qu'en poursuite établie et n'est pas utilisé pour l'amélioration de la détection (l'acquisition) des signaux faibles. Il ne permet notamment aucunement de réaliser une acquisition sur des signaux réfléchis.

Le traitement d'antenne synthétique proposé permet de réaliser l'intégration cohérente ou focalisation des signaux obtenus après corrélation, ceci dans n'importe quelle direction, notamment celles correspondant à des trajets multiples, aussi bien en phase d'acquisition qu'en phase de poursuite. L'échantillonnage dans le temps de la phase permet en effet de réaliser un traitement complet de compensation de la phase de l'onde reçue dans n'importe quelle direction, voire de réaliser, comme proposé, un traitement optimal adaptatif en vue d'apporter une robustesse supplémentaire vis à vis de sources d'interférence fortes.

Dans les dispositifs connus, l'intégration cohérente réalisée sur le signal après corrélation, en phase d'acquisition et non de poursuite revient à créer un effet de directivité d'antenne, mais uniquement orienté perpendiculairement à la direction de déplacement. Si l'intégration cohérente est relativement longue vis à vis du déplacement réalisé, cette directivité synthétique dégrade la sensibilité de détection des signaux qui n'arrivent pas dans la direction perpendiculaire au déplacement (par exemple, dans le cas d'une intégration cohérente classique de 20 ms pour le GPS, une vitesse de déplacement crée une directivité synthétique perpendiculaire au déplacement limitée à une ouverture à 3 dB de 5˚ à 100 m/s, ce qui réduit la capacité à détecter les satellites sous les autres incidences.

La prise en compte de l'effet d'antenne synthétique dès l'acquisition permet d'améliorer aussi la robustesse de fonctionnement classique des récepteurs, en réduisant les temps d'acquisition.

De façon générique, le principe d'acquisition et de poursuite des signaux multiples proposé consiste :

- dans un premier temps, à réaliser l'accrochage sur le signal direct en tenant compte de la trajectoire connue du porteur lorsqu'elle est disponible ; en phase d'acquisition, il faut connaître le vecteur vitesse du porteur et la direction du satellite (déterminée à partir des éphémérides connues des satellites et d'une position approximative du porteur). L'accrochage est réalisé par recherche selon les retards de code de la meilleure détection, dans la direction visée,
- une fois le signal direct acquis et poursuivi par l'antenne synthétique, on réalise la recherche des échos correspondant aux réflexions du signal direct ; le domaine de recherche est alors asservi sur le retard du trajet direct en cours de poursuite (selon un retard initial et une profondeur du domaine de retard dépendant de l'application), et l'intégration cohérente est réalisée dans la direction du domaine angulaire exploré (fixe ou à balayage).

L'invention utilise des mesures de phase après corrélation, ainsi elle se différentie notablement des solutions consistant à remettre en cohérence les signaux en fréquences intermédiaires ou FI avant corrélation. Ce traitement post-corrélation permet d'utiliser sans refonte importante l'architecture classique des récepteurs connus.

En outre, la mise à profit de la sous-porteuse des signaux de type BOC pour élargir le domaine de vitesse de déplacement du porteur (liée à la limitation de la fréquence de calcul de la phase) est intéressante pour fournir un gain dans les directions visées, quelle que soit la vitesse de déplacement du porteur.

On reconstitue un effet d'antenne synthétique dans le cas d'un récepteur de système de navigation par satellites à partir de la connaissance du déplacement de l'antenne (considérée comme un capteur élémentaire) de réception sans modification de l'architecture de traitement classique de réception basée sur les boucles à verrouillage de phase ou PLL et les boucles à verrouillage de délai ou DLL. L'effet d'antenne est obtenu par combinaison des mesures de phase et d'amplitude des signaux poursuivis (signal complexe après corrélation par le code local), prélevées à différents instants de mesures.

Cette combinaison cohérente des mesures, réalisée après compensation de la phase correspondant au déplacement dans l'axe à vue du satellite, permet de reconstituer une directivité spatiale liée à l'antenne apparente, combinant ainsi en cohérence de phase le signal du satellite de phase stationnaire et cohérente dans la direction visée et en non cohérence pour les autres sources d'interférences et de réflexion des signaux directs (puisqu'il n'y a pas correspondance entre l'évolution de la phase du brouilleur avec celle de la compensation de phase propre à la direction relative de déplacement de l'antenne par rapport au satellite).

Ce traitement de compensation de phase est réalisé pour toutes les étapes de traitement, notamment en phase d'acquisition et de poursuite.

Ainsi, le dispositif d'antenne à ouverture synthétique peut être orienté dans une ou plusieurs directions quelconques, et asservi par commande externe. Les coefficients de pondération en amplitude et en phase du dispositif d'antenne à ouverture synthétique sont appliqués sur les sorties complexes après corrélation par le code local, et avant intégration cohérente, et le diagramme de directivité du dispositif synthétique peut être optimisé pour chaque direction visée, de façon à minimiser le niveau des lobes secondaires de la fonction de directivité spatiale (pondération de Hamming, ...) et minimiser l'effet des interférences par création de zéros dans les directions des sources d'interférence par exemple par traitement adaptatif de type Capon.

Le principe repose sur la discrétisation des mesures de phase de porteuse au cours du temps et avant intégration cohérente. Ces mesures discrètes de phase réalisées au cours du déplacement du porteur i.e. du dispositif d'antenne à ouverture synthétique sont alors analogues à des mesures simultanées prélevées avec une antenne réseau dont la position des éléments d'antennes correspondrait à ceux discrétisés le long du déplacement.

La principale limitation du traitement proposé est liée à la cadence de discrétisation nécessaire pour obtenir des mesures de phase échantillonnées spatialement à moins de $\dfrac{\lambda}{2}$ afin que l'antenne ne présente pas d'ambigüité angulaire, $\lambda$ représentant la longueur d'onde de la porteuse ou de la sous-porteuse.

L'invention permet d'augmenter le rapport signal à bruit pour l'extraction des mesures de retard et de Doppler en entrée des boucles de poursuite du récepteur, de réduire les erreurs de trajets multiples et d'éliminer les sources d'interférences à phase stationnaire en temps.

Ce traitement est particulièrement adapté pour l'amélioration de la réception des signaux de navigation par satellites et de la robustesse aux trajets multiples et aux interférences ou harmoniques en raison de la compensation de la phase de réception en cohérence du déplacement spatial de l'antenne de réception, de trajectoire connue.

Les avantages d'un dispositif d'antenne à ouverture synthétique de réception de signaux d'un système de navigation par satellites selon l'invention sont les suivants :

- amélioration simultanée de la sensibilité de réception sur l'ensemble des signaux satellites en vue,

- réjection des trajets multiples spéculaires en dehors de la direction de visée satellite,

- réjection des sources d'interférences cohérentes en dehors de la direction de visée satellite, et

- capacité de réjection des sources de brouillage fortes et cohérentes par traitement adaptatif appliqué à l'antenne synthétique équivalente.

En raison de son gain d'intégration cohérente, le traitement d'antenne synthétique peut être appliqué en vue de l'acquisition et la poursuite des trajets non directs des signaux des satellites. Cette capacité de poursuite simultanée de plusieurs trajets de propagation peut trouver de nombreuses applications en vue d'aider à la navigation (évitement d'obstacle, navigation sur la carte, altimétrie, ...).

Pour être identifiables séparément du trajet direct et être pris en compte par ce traitement, les trajets réfléchis doivent présenter un retard supérieur au domaine de corrélation en temps du code.

Une fois réalisée l'acquisition et la poursuite du signal direct, les signaux réfléchis sont scrutés en sortie d'une ou plusieurs voies du dispositif d'antenne synthétique, ceci dans un domaine de retard du code compatible de la "profondeur" attendue, dépendant de l'altitude du porteur. La recherche du retard du code reçu en acquisition est réalisée classiquement en testant les différentes hypothèses de retard du code local dans le domaine attendu. Chaque intégration cohérente élémentaire du signal est réalisée après corrélation par le code local, calée sur le retard à tester, mais après compensation de la phase du code local par rapport à la phase du déplacement du porteur projetée dans la direction visée par l'antenne.

Il est remarquable que les récepteurs de signaux d'un système de navigation par satellites à asservissement de boucle de phase et de retard de code réalisent classiquement une compensation de la marche du porteur au travers des filtres de boucle et des oscillateurs à commande numérique NCO, qui permet l'entretien en temps réel des phases de code et de porteuse générées pour la démodulation du signal reçu. Cet entretien de la position porteur est équivalent à celui apporté par la connaissance a priori de la trajectoire porteur. La figure 2 illustre schématiquement un tel récepteur.

La boucle de porteuse permet d'estimer, en temps réel, l'évolution relative de la phase de porteuse et de la corriger, ceci à partir du discriminateur de phase de porteuse 208, du filtre de boucle de porteuse 209 et de l'oscillateur à commande numérique de porteuse 202.

De même, la boucle de code permet d'estimer, en temps réel, l'évolution relative du retard de code et de le corriger, ceci à partir du discriminateur de retard de code 206, du filtre de boucle de code 207 et de l'oscillateur à commande numérique de code 204.

L'intégration cohérente 205 réalisée après démodulation de la porteuse et du code adapté réalise alors une intégration à phase stationnaire dans la direction du signal satellite, équivalente à une antenne synthétique, utilise également deux multiplicateurs 201 et 203.

Cependant, dans le cas des signaux GPS, la durée d'intégration cohérente est limitée par la durée des bits de données des messages (20ms), il n'y a pas de moyen d'orienter le faisceau de l'antenne synthétique ainsi créée dans une direction différente de celle du satellite sur lequel les boucles de code et de phase sont accrochées, et il n'y pas possibilité d'appliquer une pondération spatiale sur le signal démodulé avant intégration cohérente.

Dans le cas où les codes reçus sont modulés par les données, par exemple dans le cas des signaux GPS courants, la durée d'intégration cohérente de la fonction de corrélation est limitée par le rythme de ces données (par exemple, 20 ms dans le cas des signaux GPS ou des voies de données de Galiléo), ce qui procure un effet d'antenne synthétique équivalent à une antenne linéaire de 100*0,02=2m (environ 10 $\lambda$, correspondant à un gain spatial de 10 dB) dans le cas d'une vitesse du porteur i.e. du récepteur de 100m/s.

Les voies pilotes, sans données, disponibles avec les nouveaux signaux permettent des durées d'intégration plus importantes, par exemple la période des codes de voies pilote Galiléo est de 100 ms, soit une longueur apparente d'antenne de 10m (environ 50 $\lambda$, correspondant à un gain spatial de 17 dB) dans le même cas de vitesse du porteur i.e. du récepteur de 100m/s.

Un dispositif d'antenne à ouverture synthétique de réception selon l'invention permet d'assurer des durées d'intégration cohérentes plus importantes, en prolongeant l'intégration cohérente des mesures de phase obtenues en sortie de boucle de phase PLL, grâce à la compensation du mouvement du porteur projeté sur la direction de visée de l'antenne, pendant la durée de cette intégration. Il permet aussi en phase d'acquisition de définir l'angle de visée de l'antenne correspondant à la direction attendue de détection du signal.

Une implémentation à moindre impact du principe de l'antenne synthétique dans l'architecture courante des récepteurs de signaux d'un système de navigation par satellites implique de prélever les informations de phase (et non d'incréments de phase) et d'amplitude (issues des parties imaginaires I et réels Q) après intégration cohérente obtenues après démodulation de code), à un rythme compatible avec le déplacement réalisé, car il est souhaitable que l'échantillonnage spatial respecte Shannon pour éviter les lobes images, donc de l'ordre de la ms pour un avion, et sur une durée correspondant à la taille souhaitée du dispositif d'antenne (au maximum de l'ordre du mètre, pour ne pas avoir un pinceau de directivité trop étroit, pour viser la direction du satellite sans trop de contraintes sur le rythme de rafraîchissement et de précision sur la stabilité de l'attitude du porteur et de stabilité de l'horloge du récepteur).

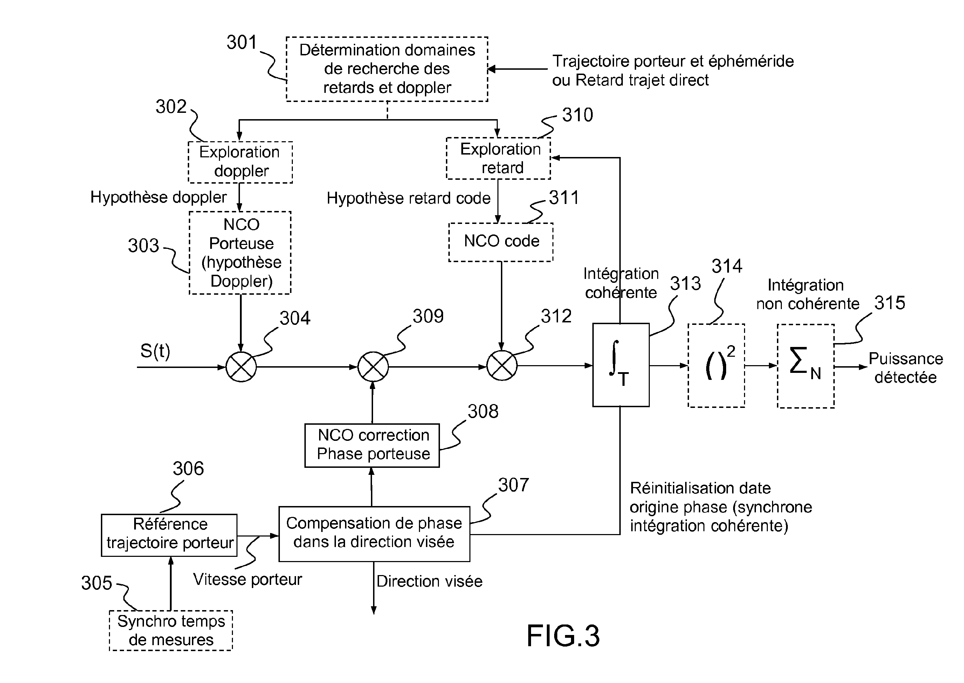

La figure 3 illustre schématiquement un mode de réalisation de l'invention en acquisition cohérente sur porteuse simple. Les éléments représentés en pointillés représentent des éléments présents dans un dispositif classique de réception de signaux d'un système de navigation par satellites.

Le module 301 effectue la détermination des domaines de recherche des retards et Doppler (correspondant aux décalages en temps et fréquence du signal reçu dans le domaine de retard et de vitesse relative possible entre satellite et récepteur) à partir de la trajectoire du porteur (i.e. connaissance a priori de la position du récepteur et connaissance des éphémérides, ou encore de la connaissance a priori des retards de propagation obtenu par modèle). A partir des signaux de sortie du module 301, un module 302 d'exploration Doppler permet d'explorer successivement les différentes hypothèses de décalage de fréquence de la porteuse reçue, en pilotant la valeur de la fréquence porteuse de référence selon l'hypothèse Doppler. Un oscillateur à commande numérique de porteuse 303 permet de générer le signal de NCO à la fréquence attendu du canal doppler. Le signal reçu S(t) est multiplié par un multiplicateur 304 par le signal de sortie de l'oscillateur à commande numérique de porteuse 303.

Un module 305 de synchronisation en temps de mesures permet de synchroniser la modélisation de trajectoire de référence porteur sur la base de temps du récepteur par la fourniture d'une horloge commune. Le signal de sortie du module 305 permet au module 306 de déterminer la vitesse de déplacement du porteur, i.e. du dispositif $\vec{V}_p$. A partir de la vitesse de déplacement le module 307 calcule l'évolution de phase du signal reçu correspondant à la projection de la vitesse de déplacement du dispositif dans la direction du signal reçu, à partir de la direction de visée d et une réinitialisation de la date d'origine de phase appliquée de façon synchrone avec l'initialisation de l'intégration cohérente réalisée par le module 307. Cette évolution de phase est utilisée par un oscillateur à commande numérique 308 pour corriger la phase de la porteuse. Un multiplicateur 309 multiplie les signaux de sortie du multiplicateur 304 et de l'oscillateur

EP 2 410 352 A1

à commande numérique 308.

Un module 310 de génération des retards permet d'explorer successivement les différentes hypothèses de décalage de temps du code reçu, en pilotant le retard du code de référence local selon l'hypothèse de retard du signal reçu à partir du signal de sortie délivré par le module 301. Le signal de sortie du module 310 est utilisé par un oscillateur à commande numérique de code 311 permet de générer le code de référence local avec le retard commandé. Un multiplicateur 312 effectue le produit des signaux de sortie de l'oscillateur à commande numérique 311 et du signal de sortie du multiplicateur 309. Le signal résultant du multiplicateur 312 est intégré par un module 313 d'intégration cohérente pendant une durée T relative à une position particulière du retard du signal local en cours de test. Les différents retards du code local dans le domaine à explorer sont alors testés, entraînant à chaque incrément de retard une ré-initialisation de l'intégrateur cohérent et de la compensation de phase dans la direction visée.

L'estimation de la puissance du signal reçu est effectuée par détection quadratique.au moyen d'un module 314 de calcul du module carré et d'un module 315 d'intégration non cohérente pour recherche du maximum.

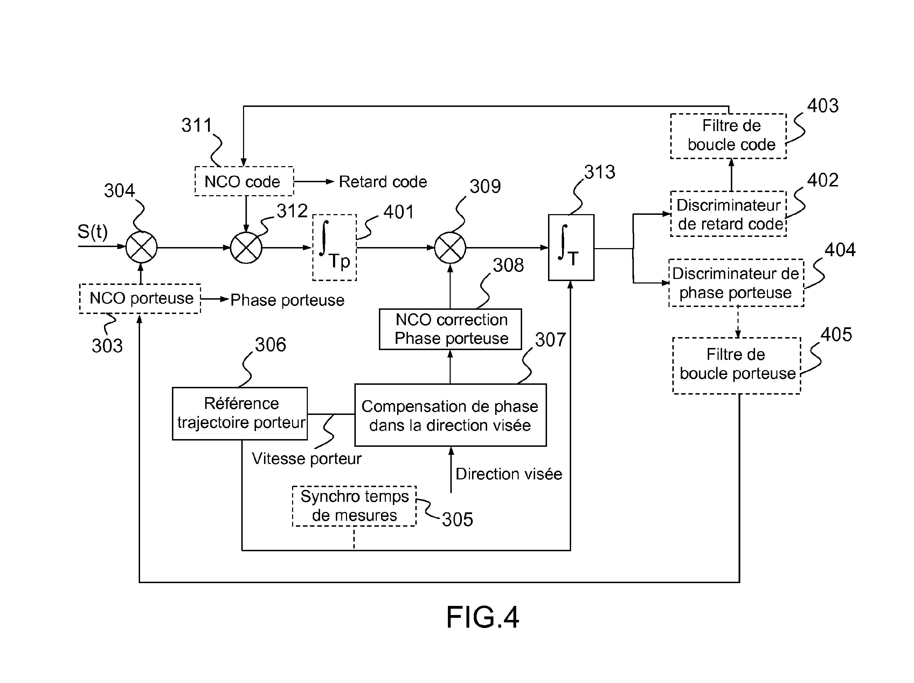

La figure 4 illustre schématiquement un mode de réalisation de l'invention en poursuite cohérente sur porteuse simple. On rappelle que les éléments ayant une même référence sont similaires, même si dans ce mode de réalisation de poursuite de signal, certains éléments sont agencés différemment, comme représenté sur la figure 4.

Un module d'intégration courte 401 sur une durée Tp permet l'échantillonnage spatial de la phase le long du déplacement du porteur, i.e. du dispositif (par exemple, une intégration courte sur une durée Tp de 1 ms correspond à une distance de prélèvement de la phase de 5 cm ou moins pour une vitesse porteur inférieure à 50 m/s).

En outre, pour la poursuite de signal, le dispositif comprend un module 402 discriminateur de retard de code (de type ponctuel-delta, ou corrélateur étroit ou encore Double-delta) pour estimation de l'erreur sur le temps reçu elle-même délivrée à un filtre de boucle de code 403 dont l'ordre et la bande passante sont adaptés à la dynamique porteur, avec ou sans aide de la boucle de phase plus précise, et permettant de filtrer l'erreurs de temps selon un modèle d'évolution compatible cette dynamique délivrant la consigne de correction de retard filtrée à destination de l'oscillateur à commande numérique de code 311.

De plus, pour la poursuite de signal, le dispositif comprend un module 404 discriminateur de phase de porteuse (de type arc-tangente simple ou étendu) pour estimation de l'erreur de la phase porteuse elle-même délivrée à un filtre de boucle de porteuse 405 et permettant de filtrer l'erreur de phase selon un modèle d'évolution compatible cette dynamique délivrant la consigne de correction de phase porteuse filtrée à destination de l'oscillateur à commande numérique de porteuse 303.

Tant que la directivité correspondant au déplacement de l'antenne sur la durée d'intégration courte $T_p$ reste faiblement marquée (i.e. tant que la longueur apparente de l'antenne liée au déplacement du porteur pendant la durée $T_p$ reste faible par rapport à la longueur d'onde de la porteuse dans l'exemple précédent, ouverture du lobe principal de la fonction de directivité de l'antenne synthétique à -3dB de 200° pour une intégration courte de 1 ms et pour une vitesse porteur de 50m/s, il est aussi possible de poursuivre le signal dans des directions différentes en parallèle

Cette poursuite en parallèle de voies dont les fonctions de directivités se recoupent entre elles à mieux que -3dB du maximum du lobe principal de chaque voie de la fonction de directivité de l'antenne synthétique liée au déplacement du porteur pendant la durée $T_p$ permet de réaliser une interpolation angulaire entre les voies adjacentes afin de déterminer la position du maximum pour une détermination précise de l'angle d'incidence du signal. Cette capacité de localisation des sources trouve son intérêt pour le repérage des directions correspondant aux réflexions les plus fortes du signal direct par le sol (points brillants).

Les signaux GPS actuels sont basés sur un code BPSK modulant la porteuse, la phase de poursuite est donc celle de la porteuse, une fois le code démodulé. Cela impose que la période de prélèvement des mesures de phase soit compatible de la fréquence d'échantillonnage spatial du dispositif d'antenne à ouverture synthétique, donc que la distance séparant deux mesure de phase ne dépasse pas $\dfrac{\lambda}{2}$ ($\lambda$ représentant la longueur d'onde la porteuse) de la fréquence de porteuse.

Dans le cas du GPS, L1 (bande de fréquences d'émission des signaux GPS en C/A (C/A signifiant, en langue anglaise pour "Coarse-Acquisition" signal ouvert aux utilisateurs civils du GPS, initialement dédié à l'accélération de l'acquisition du code crypté P(Y)), $\lambda/2$ est de l'ordre d'environ 10cm, les codes GPS sont périodiques de période 1ms (borne inférieure de durée de corrélation). Il est donc impossible de traiter des vitesses de déplacement supérieures à 100 m/s sans création d'ambigüités spatiales : Vp=100m/s => Te = ($\lambda/2$) / Vp= 0,1/100=1 ms, $T_e$ représentant la période d'échantillonnage du signal démodulé (équivalent à Tp). Plus la vitesse de déplacement est élevée et plus la cadence de compensation du déplacement propre du porteur doit être élevée, ce qui est une limitation à l'application de cette technique au domaine des récepteurs GPS spatiaux (la vitesse apparente des satellites MEO étant supérieure à 1000 m/s, un échantillonnage à 1 kHz conduit à un échantillonnage spatial tous mètres, ce qui est bien supérieur à la contrainte d'échantillonnage spatial à $\lambda/2$ , égale à 20cm pour la fréquence L1).

9

Il existe également des systèmes de navigation par satellites à modulation des codes d'étalement de type BOC ou ALTBOC s'appuyant sur une sous-porteuse de l'ordre de 2 MHz à 20 MHz. Les signaux du système Galileo sont de type BOC.

La phase de la sous-porteuse du code BOC peut être poursuivie par la boucle de code du récepteur au même titre que la phase de la porteuse. Le traitement d'antenne synthétique peut donc être appliqué par intégration cohérente de la phase de la sous-porteuse du code.

L'utilisation de la sous-porteuse des signaux BOC permet d'aller au-delà de la limite d'intégration cohérente fixée par la bande de boucle (bande passante définie par le filtre de boucle, dont la largeur minimum est fixée par la dynamique du porteur afin de réduire les erreurs de trainée). La longueur d'onde de la sous-porteuse est bien plus importante que celle de la porteuse. La longueur d'onde de la porteuse est courte (environ 20cm), et la durée d'intégration cohérente de la boucle de phase est limitée par la vitesse de variation des erreurs résiduelles de phase dues à la dynamique (en présence d'évolution rapide de la dynamique du porteur et d'un filtre de boucle d'ordre donné, il est nécessaire que le temps d'intégration de la boucle ne soit pas trop important pour ne pas introduire d'effet de trainée) du porteur, i.e. du dispositif. La fréquence de sous-porteuse étant nettement inférieure à celle de la porteuse, il est possible de suivre la phase sous-porteuse à un rythme bien plus faible, tout en restant compatible avec des erreurs de suivi de dynamique compatibles de la boucle de porteuse (la boucle de porteuse permet de poursuivre à court terme les évolutions de la phase de la porteuse, avec une bande relativement large, assurant une bonne robustesse aux évolutions de dynamique porteur ; les erreurs de phases résiduelles ramenées à la fréquence de sous-porteuse sont alors négligeable, et autorisent une réduction importante de la bande de boucle de sous-porteuse (ou encore une durée d'intégration cohérente longue) ).

L'utilisation de la sous-porteuse entraîne une augmentation dans un rapport de 75 à 750, selon le code de type BOC utilisé, sur la limite de la vitesse de déplacement du dispositif d'antenne à ouverture synthétique de réception, du fait du rapport des fréquences de porteuse et de sous-porteuse.

Ce dispositif offre une aide à la poursuite de phase porteuse (précise mais ambigüe après intégration cohérente) par la boucle de sous-porteuse (moins précise mais non ambigüe).

L'utilisation d'un modèle de trajectoire du porteur i.e. du dispositif est aussi possible dans de nombreux cas d'applications, telles les domaines spatial, ferroviaire, et aéronautique hybridée, et permet en outre de maintenir l'architecture classique de boucles de phase court terme (liée à la durée d'intégration courte spécifique au filtre de boucle porteuse).

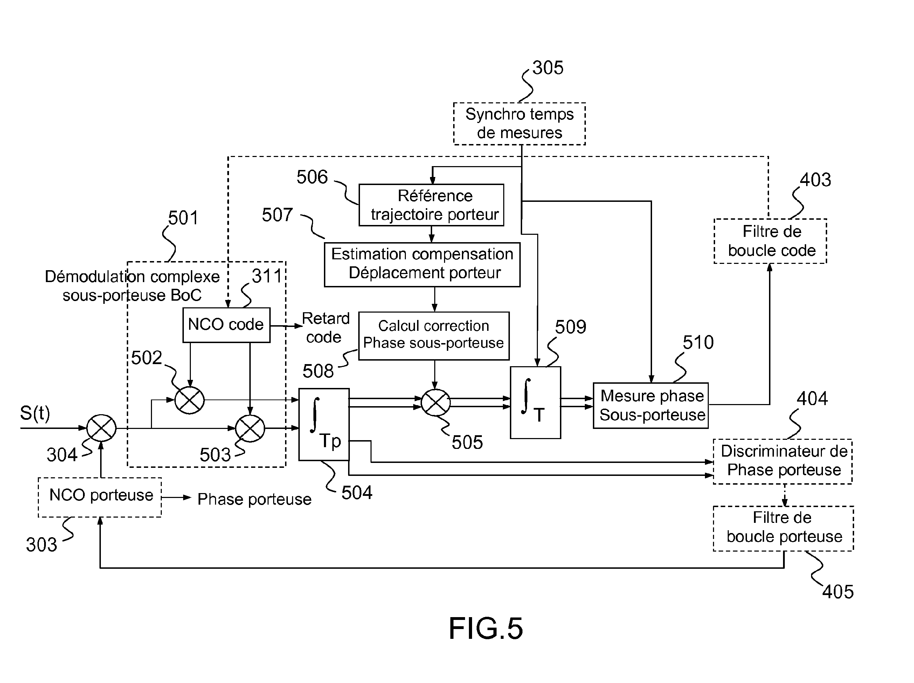

Sur la figure 5 est représenté schématiquement un mode de réalisation de l'invention sur fréquence de sous-porteuse de type BOC.

Le signal reçu S(t) est multiplié par le multiplicateur 304 par le signal de sortie de l'oscillateur à commande numérique de porteuse 303, pour délivrer un signal à destination d'un module 501 de démodulation complexe de la modulation de type BOC.par multiplication du signal reçu par un multiplicateur 502 réalisant la multiplication avec le code local BOC modulé en sinus (BOC_sinus) et un multiplicateur 503 réalisant la multiplication avec le code local BOC en quadrature modulé en cosinus (BOC_cosinus) .L'oscillateur à commande numérique de code 311 génère les codes BOC-sin et BOC-cos locaux asservi en temps sur le temps reçu et le transmet aux multiplicateurs 502 et 503.

Les signaux de sortie des multiplicateurs 502 et 503 sont transmis à un module d'intégration courte 504 qui intègre les signaux sur une durée inférieure ou égal à 20 ms pour transmettre les résultats au discriminateur de phase de porteuse 404. Les signaux résultant du module d'intégration courte 504 sont également transmis à un multiplicateur 505.

Le module 305 de synchronisation en temps de mesures permet de synchroniser la modélisation de trajectoire de référence du porteur sur la base de temps du récepteur par la fourniture d'une horloge commune. Le signal de synchronisation de temps du module 305 est transmis au module 506 de référence de trajectoire du dispositif qui délivre en sortie à destination d'un module 507 d'estimation de la vitesse de déplacement relatif du porteur, i.e. du dispositif $\vec{Vp}$ , correspondant à la projection de la vitesse de déplacement du porteur dans la direction visée. Cette vitesse est transmise à un module 508 de compensation de la phase de sous-porteuse dont le signal de sortie est transmis au multiplicateur 505. Les signaux de sortie du multiplicateur 505 ainsi que les signaux de sortie du module 305 de synchronisation en temps des mesures sont intégrés par un module d'intégration longue 509 sur une durée de plusieurs secondes, (durée à moduler selon la longueur apparente souhaitée de l'antenne).

Les résultats de l'intégration longue sont transmis au module 510 de mesure de la phase de sous-porteuse, par discrimination Arctangente (calcul de la phase du signal d'erreur complexe par arc-tangente).

L'intérêt principal pour la réception des signaux est que la sous-porteuse permet d'augmenter la durée de corrélation cohérente du code (la phase de sous-porteuse étant en fait l'observation de la phase du code) ce qui améliore la sensibilité (et en réjection des sources cohérentes dans les autres directions), en fonction de la longueur apparente de l'antenne exprimée en longueur d'onde de sous-porteuse.

Le gain d'antenne synthétique résulte des deux effets d'intégration :

- le gain d'intégration cohérente, à court terme, sur la phase de porteuse (100 ms au maximum), intrinsèque à la boucle de phase,
- le gain d'intégration cohérente sur la phase de sous-porteuse, basée sur une trajectoire porteur de référence, pouvant atteindre plusieurs secondes (par exemple, dans le cas d'un satellite à 1000 m/s, une durée d'intégration de 10 s conduit à une longueur d'antenne synthétique équivalente à 30 λ, dans le cas d'un signal de type BOC(1,1), soit un gain de l'ordre de 17 dB)

Si on retient comme référence de phase de l'antenne ainsi constituée la position de dernier instant de mesure, ce traitement n'introduit pas de latence notable.

La diversité des nouveaux codes de système de navigation par satellites met à disposition plusieurs longueurs d'ondes (flexibilité/variété des codes émis) qui permet d'élargir le domaine de vitesses du porteur auquel s'applique le principe de l'antenne synthétique, i.e. du dispositif d'antenne à ouverture synthétique.

L'échantillonnage spatial étant limité par le cadencement interne des traitements de désétalement des codes (les codes les plus rapides étant de 1 ms), il n'est pas autorisé (du fait du respect du principe d'échantillonnage de Shannon, nécessaire pour éviter les ambiguïtés spatiales) que le déplacement du porteur soit supérieur à $\frac{\lambda}{2}$, λ correspondant à la longueur d'onde de la porteuse ou de la sous-porteuse considérée, sur la période de cadencement.

Ainsi dans le cas du GPS pour lequel C/A L1 vaut 1,575 GHz la vitesse maximum de déplacement est 0,1/0,001=100 m/s, donc difficilement utilisable pour les application aéronautiques, alors que l'utilisation de la sous porteuse d'un signal de type BOC (1,1) E1 (E1 : fréquence d'émission Galileo) implique une vitesse limite du dispositif de 300/0,001=300 km/s ; les récepteur aéronautiques fonctionnant classiquement plutôt au rythme de 20 ms, la vitesse maximum dans ce dernier cas devient 300/0,02=1500 m/s.

L'utilisation de la sous-porteuse permet d'utiliser un tel dispositif pour des applications aéronautiques et spatiales.

Suivent maintenant les formulations mathématiques explicatives.

A) Effet d'antenne synthétique sur fréquence de porteuse dans le cas d'une modulation BPSK simple :

Soit S(t) le signal émis, composé d'un terme de modulation à large bande et d'une porteuse s'écrit :

$$S(t) = C(t) \times \exp(2j\pi.f_0.t)$$

T représentant le temps,
C(t) représentant C(t) représentant le code d'étalement pseudo-aléatoire (BPSK) du signal,
$f_0$ représentant la fréquence d'émission de la porteuse,

En réception, le signal affecté d'un Doppler s'écrit :

$$R(t) = S(t-\tau).\exp(2j\pi\frac{V_r}{c}f_0.t) = C(t-\tau(t)) \times \exp(2j\pi.f_0.(t-\tau(t))) \times \exp(2j\pi\frac{V_r}{c}f_0.(t-\tau(t)))$$

τ représentant le retard de propagation satellite-récepteur,
$V_r$ représentant la vitesse relative du satellite par rapport au récepteur,
c représentant la vitesse de la lumière,

Après convergence de la boucle de fréquence suivant l'acquisition le signal s'écrit en bande de base :

$$R_{BB}(t) = C(t-\tau(t)) \times \exp(-2j\pi.f_0.\tau(t)) \times \exp(-2j\pi\frac{V_r}{c}f_0.\tau(t))$$

Après corrélation par le code local la fonction de corrélation obtenue s'écrit :

$$\Gamma_R(0,t) = \Gamma_C(\tau(t)) \times \exp(-2j\pi.f_0.\tau(t)) \times \exp(-2j\pi\frac{V_r}{c}f_0.\tau(t))$$

$\Gamma_C$ représentant la fonction de corrélation du code d'étalement,

Soit encore, en négligeant le terme de Doppler relatif :

$$\Gamma_R(0,t) = \Gamma_C(\tau(t)) \times \exp(-2j\pi.f_0.\tau(t))$$

Soit $\{t_i\}_{i=1,N}$ l'ensemble des instants de mesures.

Les mesures observables pour la reconstitution de l'antenne synthétique est :

$$\{\Gamma_R(0,t_i)\}_{i=1,N}$$

Le signal en sortie d'antenne synthétique s'écrit (dans le cas d'une formation de voie simple) :

$$Z_R(k) = \sum_{i=1}^{N} \Gamma_R(0,t_i) \times \exp(-2j\pi.f_0.\frac{\vec{p}_R(t_i)}{c}.\vec{s}_k(t_i))$$

k étant l'indice du satellite,
$\vec{s}_k(t_i)$ étant le vecteur direction du satellite vu du récepteur, à l'instant $t_i$
$\vec{p}_R(t_i)$ est le vecteur position de l'antenne à l'instant $t_i$

soit encore :

$$Z_R(k) = \sum_{i=1}^{N} \Gamma_C(\tau(t_i)) \times \exp(2j\pi.f_0.(\tau(t_i) - \frac{\vec{p}_R(t_i)}{c}.\vec{s}_k(t_i)))$$

En supposant la position du dispositif connue à chaque instant :

$$\tau(t_i) = \frac{\vec{p}_R(t_i)}{c}.\vec{s}_k(t_i)$$

En supposant que la longueur de l'antenne reste faible devant la longueur de chip de code, la puissance reçue en direction du satellite devient :

$$Z_R(k) = \sum_{i=1}^{N} \Gamma_C(\dot{\tau}(t_i)) \cong N.\Gamma_C(\tau(t_0))$$

De même pour toute source d'interférence cohérente apparue dans toute autre direction :

$$Z_R(k) = \Gamma_C(\tau(t_0)) . \sum_{i=1}^{N} \exp(2j\pi.f_0.(\tau_J(t_i) - \frac{\vec{p}_R(t_i)}{c}.\vec{s}_k(t_i)))$$

$$= \Gamma_C(\tau(t_0)) . \sum_{i=1}^{N} \exp(2j\pi.f_0.(\frac{\vec{p}_R(t_i)}{c}.\vec{s}_J(t_i) - \frac{\vec{p}_R(t_i)}{c}.\vec{s}_k(t_i)))$$

$$= \Gamma_C(\tau(t_0)) . \sum_{i=1}^{N} \exp(2j\pi.f_0.(\frac{\vec{p}_R(t_i)}{c}.(\vec{s}_J(t_i) - \vec{s}_k(t_i))))$$

$$= \Gamma_C(\tau(t_0)) . D(\vec{s}_J(t_i) - \vec{s}_k(t_i))$$

où D est la fonction de directivité de l'antenne équivalente.

B) Effet d'antenne synthétique sur fréquence de sous-porteuse dans le cas d'une modulation de type BOC :

Dans le cas d'une modulation BOC sinus le signal émis s'écrit :

$$S(t) = C_{BOC_s}(t) \times \exp(2j\pi.f_0.t) = C_{BPSK}(t) \times \sin(2\pi.\breve{\Delta f}.t) \times \exp(2j\pi.f_0.t)$$

$C_{BOC}s$ représentant le code d'étalement BOC du signal,
$C_{BPSK}$ représentant la composante BPSK seul de la modulation BOC ,
En réception, le signal retardé s'écrit :

$$R(t) = \acute{S}(t - \tau(t)) = \breve{C}_{BPSK}(t - \tau(t)) \times \sin(2\pi\Delta f(t - \tau(t))) \times \exp(2j\pi.f_0.(t - \tau(t)))$$

Après démodulation de la fréquence porteuse le signal s'écrit en bande de base :

$$R_{BB}(t) = C_{BPSK}(t - \tau(t)) \times \sin(2\pi\Delta f(t - \tau(t))) \times \exp(-2j\pi.f_0.\tau(t))$$

Après corrélation par le code local par un signal de type BOC sinus la fonction de corrélation obtenue s'écrit :

$$\Gamma_R(0,t) = \Gamma_{C_{BPSK}}(\tau(t)) \times \cos(2\pi\Delta.f.\tau(t)) \exp(-2j\pi.f_0.\tau(t))$$

Pour faire apparaître le terme de phase de sous-porteuse, on réalise en parallèle la corrélation du code d'étalement BOC sinus du signal reçu par un code d'étalement local BOC cosinus, (cf. figure 5) conformément à la figure suivante, ce qui conduit à :

$$\Gamma_{R_{cs}}(0,t) = \Gamma_{C_{BPSK}}(\tau(t)) \times \sin(2\pi\Delta.f.\tau(t)) \times \exp(-2j\pi.f_0.\tau(t))$$

La somme des deux composantes permet de retrouver l'information de phase de sous-porteuse :

$$\overset{'}{\Gamma}_R(0,t) = \Gamma_{R_{ss}}\overset{'}{(0,t)} + j.\Gamma_{R_{cs}}\overset{'}{(0,t)}$$
$$= \Gamma_{C_{BPSK}}(\tau(t)) \times \exp(2\pi.\Delta f.\tau(t)) \times \exp(-2j\pi.f_0.\tau(t))$$

C'est à ce niveau que le principe se distingue de celui de l'antenne synthétique sur phase de porteuse. En effet, afin de pouvoir tirer profit de la phase de la sous-porteuse, il faut préalablement avoir pu supprimer le terme résiduel de phase de porteuse, qui tourne beaucoup plus vite que celui de la sous-porteuse. Ceci est réalisé en appliquant préalablement la boucle de phase de porteuse classique (PLL) en sortie de corrélation court terme qui suivra et compensera la phase de porteuse.

Après convergence d'une boucle de phase du premier ordre, le signal en sortie de corrélation s'écrit:

$$\Gamma_R(0,t) = \Gamma_{R_{ss}}(0,t) + j.\Gamma_{R_{cs}}(0,t)$$
$$= \Gamma_{C_{BPSK}}(\tau(t)) \times \exp(2\pi.\Delta f.\tau(t)) \times \exp(-2j\pi.f_0.\frac{\partial^2 \tau(t)}{\partial t^2}\Delta t)$$

après avoir posé,

$$\tau(t) = \tau_0 + \int_0^{\Delta t} \frac{V_r(u)}{c}du$$

$$\Gamma_R(0,t) = \Gamma_{C_{BPSK}}(\tau(t)) \times \exp(2\pi.\Delta f.\tau(t)) \times \exp(-2j\pi.\frac{f_0}{c}\frac{\partial V_r(t)}{\partial t}\Delta t)$$

La phase totale mesurée est donc composée de la phase de sous-porteuse, qu'on désire estimée, et de l'erreur résiduelle de la boucle de phase.

Pour une bonne estimation de la phase de sous-porteuse, il est donc nécessaire que l'erreur résiduelle de phase de porteuse (due à l'erreur de dynamique et au bruit thermique) reste faible.

Le but du dispositif étant de fournir une robustesse accrue sur l'estimation des pseudo-distances de satellites, il est indispensable que la boucle de phase soit aidée, soit par une référence inertielle afin de fournir une aide en vitesse ( à expliquer) précise à la boucle de phase.

Cependant, il n'est pas nécessaire que les références inertielles présentent une bonne stabilité à long terme, seule la stabilité à court terme (sur $\Delta t$) est demandée, ce qui permet l'utilisation de MEMS, à bas coût.

La phase de porteuse étant ainsi recalée sur chaque incrément de temps de sorte à limiter l'erreur sur la phase de sous-porteuse, il devient possible de n'utiliser que l'information de code pour reconstituer au travers de l'effet d'antenne synthétique une mesure de phase de code (phase de la sous-porteuse) non ambigüe nettement plus précise et robuste qu'une mesure de code de pseudo-distance obtenue par une modulation de type BOC classique (instantanée).

Ces mesures de pseudo-distances précises permettent d'obtenir une estimation précise de la position, en bénéficiant du filtrage spatial réalisée par l'antenne pour rejeter les sources d'interférences et permettre de mieux isoler les satellites poursuivis les uns des autres.

Le terme de corrélation résiduel (de démodulation du BoC sinus par le BoC sinus local) devient alors :

$$\Gamma_{R_{CC}}(0,t) = \overset{'}{\Gamma}_{C_{BPSK}}(\tau(t)) \times \exp(2\pi j.\Delta f.\tau(t))$$

Soit $\{t_i\}_{i=1,N}$ l'ensemble des instants de mesure.

Les mesures observables pour la reconstitution de l'antenne synthétique sont :

$$\left\{ \Gamma_R(0, t_i) \right\}_{i=1,N}$$

Le signal en sortie d'antenne synthétique s'écrit (dans le cas d'une formation de voie simple) :

bb

k étant l'indice du satellite,

$\vec{S}_k \, (t_i)$ est le vecteur direction du satellite vu du récepteur, à l'instant $t_i$

$\vec{P}_R \, (t_i)$ est la position de l'antenne à l'instant $t_i$

soit encore ;

$$Z_R(k) = \sum_{i=1}^{N} \Gamma_C(\tau(t_i)) \times \exp(2j\pi.\Delta f.(\tau(t_i)) \times \exp(-2j\pi.\Delta f.\frac{\vec{p}_R(t_i)}{c}.\vec{s}_k(t_i)))$$

En supposant la position du dispositif connue à chaque instant :

$$\tau(t_i) = \frac{\dot{\vec{p}}_R(t_i)}{c}.\dot{\vec{s}}_k(t_i)$$

En supposant que la longueur de l'antenne reste faible devant la longueur d'un bribe de code (le bribe de code correspond à un l'élément unitaire de modulation de la phase de code), la puissance reçue en direction du satellite devient :

$$Z_R(k) = \sum_{i=1}^{N} \Gamma_C(\tau(t_i)) \cong N.\Gamma_C(\tau(t_0))$$

De même pour toute source d'interférence cohérente apparue dans toute autre direction :

$$Z_R(k) = \Gamma_C(\tau(t_0)).\sum_{i=1}^{N} \cos(2j\pi.f_0.(\tau_J(t_i) - \frac{\vec{p}_R(t_i)}{c}.\vec{s}_k(t_i)))$$

$$= \Gamma_C(\tau(t_0)).\sum_{i=1}^{N} \exp(2j\pi.f_0.(\frac{\vec{p}_R(t_i)}{c}.\vec{s}_J(t_i) - \frac{\vec{p}_R(t_i)}{c}.\vec{s}_k(t_i)))$$

$$= \Gamma_C(\tau(t_0)).\sum_{i=1}^{N} \exp(2j\pi.f_0.(\frac{\vec{p}_R(t_i)}{c}.(\vec{s}_J(t_i) - \vec{s}_k(t_i))))$$

$$= \Gamma_C(\tau(t_0)).D(\vec{s}_J(t_i) - \vec{s}_k(t_i))$$

D étant la fonction de directivité de l'antenne équivalente.

L'effet d'antenne est obtenu par combinaison des mesures de phase et d'amplitude du signal complexe obtenu après corrélation par le code local, prélevées aux instants de mesures. Cette combinaison cohérente des mesures, après compensation de la phase correspondant au déplacement dans l'axe à vue du satellite, permet de reconstituer une directivité spatiale liée à l'antenne apparente, combinant ainsi en cohérence de phase le signal du satellite (de phase stationnaire et cohérente dans la direction visée) et en non-cohérence pour les autres sources d'interférences (puisqu'il n'y a pas correspondance entre l'évolution de la phase du brouilleur avec celle de la compensation).

Ceci nécessite de prélever les informations de phase, et non d'incréments de phase, et d'amplitude du signal comlexe obtenu après démodulation, à partir de ses composants I et Q après intégration cohérente, à un rythme compatible avec le déplacement réalisé par le dispositif afin que l'échantillonnage spatial respecte la contrainte de Shannon pour éviter les lobes images de la fonction de directivité spatiale. La cadence d'extraction de la phase est de l'ordre de la ms pour un avion. La durée d'intégration doit correspondre à la taille souhaitée de l'antenne, au maximum de l'ordre du mètre, pour ne pas avoir un pinceau de directivité trop étroit, qui pourrait poser des problèmes pour viser la direction du satellite. Si on retient comme référence de phase de l'antenne ainsi constituée la position de dernier instant de mesure, ce traitement n'introduit pas de latence notable.

En présence de sources d'interférence fortes, , il n'y a pas de contraintes particulières sur la dynamique de codage en raison de l' étalement du spectre réalisé par la corrélation avec le code local. Le traitement ne réclame donc pas de modifications significatives de l'architecture, si ce n'est le rythme d'échantillonnage des composantes I et Q du signal complexe obtenu après démodulation.

Le procédé permet d'augmenter le rapport signal à bruit pour l'extraction des mesures de retard et de Doppler en entrée des boucles, et avant couplage inertiel.

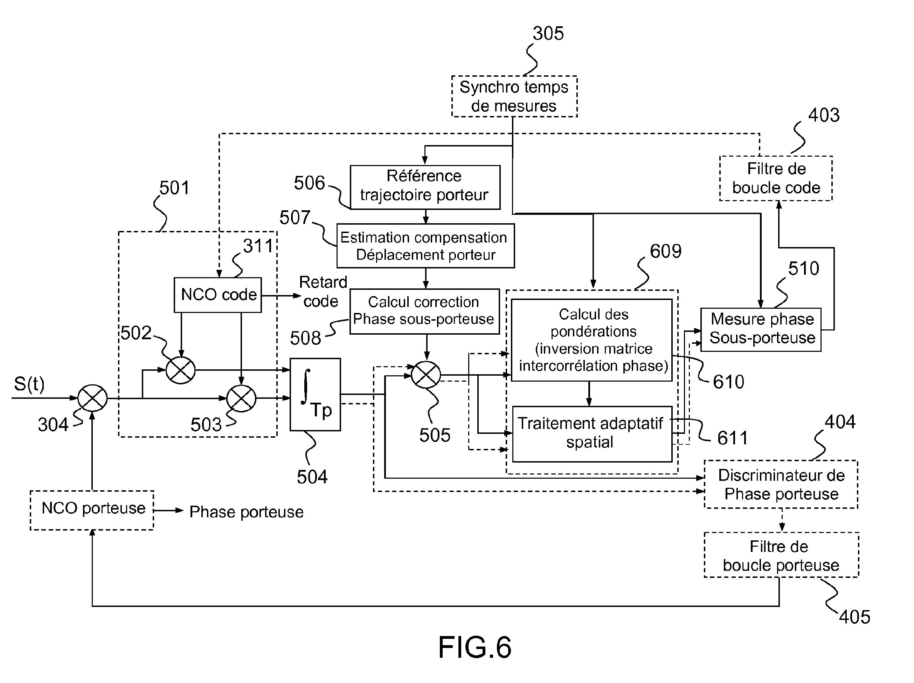

En variante d'un dispositif de la figure, comme illustré sur la figure 6, le module d'intégration longue 509 est remplacé par un module 609 de traitement adaptatif. Un tel traitement adaptatif peut s'appliquer à la phase de porteuse ainsi que de sous-porteuse, comme illustré pour la phase de sous-porteuse par la figure 6.

Le module 609 de traitement adaptatif comprend un module 610 de calcul de pondérations, et un module 611 de traitement adaptatif spatial.

Un avantage notable de la solution proposée en réception repose sur la capacité du récepteur à échantillonner la phase de porteuse ou sous-porteuse du signal reçu à des instants représentatifs d'un échantillonnage spatial.

Cet échantillonnage spatial permet de réaliser une intégration spatiale cohérente, ainsi que d'être mis à profit pour reconstituer par pondération des phases élémentaires d'un diagramme de directivité adaptatif, basé sur la minimisation de l'énergie reçue sur cet ensemble d'échantillons (ce qui n'est pas faisable si on réalise une intégration cohérente sur la même durée).Le principe du traitement d'antenne présenté ci-avant peut être utilisé pour réaliser un traitement adaptatif spatial à l'aide des mesures échantillonnées en temps, obtenues après corrélation.

Le traitement adaptatif spatial est généralement appliqué en prélevant de façon synchrone (aux mêmes instants) les signaux provenant de capteurs spatialement séparés (échantillonnage spatial), et en calculant la matrice d'intercorrélation de ces différents signaux sur un horizon temporel donné dépendant de la cadence de rafraîchissement à atteindre.

Dans le cas du dispositif d'antenne à ouverture synthétique, réalisé après corrélation par le code local 509, l'échantillonnage spatial est réalisé par cadencement du prélèvement des mesures d'amplitude et de phase du signal après intégration courte 504 et compensation du déplacement relatif du porteur 506, 507, 508.

On pose $\{W(x(t_i+T_k)\}_{i=1,N}$ , les échantillons de mesures complexes pour l'intervalle de temps Tk.

Les mesures compensées ainsi obtenues aux différents instants sont équivalentes à des mesures de phase et d'amplitude qui auraient été prélevées par des capteurs physiques échantillonnés le long du chemin parcouru par l'antenne. $\{W(x_i(T_k)\}_{i=1,N}$ , avec $x_i(t_k) = x(t_i+T_k)$ .

Par la suite on note W le vecteur des mesures spatiales. Les algorithmes d'inversion de matrice s'appliquent à l'identique pour les deux types d'approches (antenne physique et antenne synthétique).

On considère le champ reçu sur le réseau comme la superposition d'un champ signal induit par la source utile de faible amplitude et à phase stationnaire, et d'un champ de bruit non isotrope induit pas un ou plusieurs brouilleurs de fort niveau, eux aussi à phase stationnaire.

Le traitement adaptatif d'antenne consiste à déterminer les coefficients de pondération, adaptés à ce champ particulier de bruit, et qui en minimisent les effets.

Classiquement, le problème peut être traité comme un problème d'optimisation sous contrainte, posé de la façon suivante : le champ de bruit étant l'élément largement prédominant dans l'énergie recueillie au sortir du traitement classique, on cherche le vecteur pondération W qui minimise cette énergie e($h_i$), sous la contrainte de maintenir un gain unité dans la direction visée D, ce qu'on exprime par la condition :

$$W^*D = 1$$

La solution de ce problème d'optimisation est bien connue, dont on rappelle seulement ici les deux résultats essentiels :

a) le vecteur pondération optimal est lié au vecteur direction de pointage D d'une part, et à la matrice de corrélation R d'autre part, par la relation :

$$W = \frac{R^{-1}D}{D^* \, R^{-1}D}$$

b) l'énergie, résultant de l'application au réseau de x vecteur de pondération optimal, sera alors :

$$e(h_i) = \; <W^*RW> \; = \; <(D^*R^{-1}D)^{-1}>$$

Ce dernier résultat montre que la relation matricielle ne met plus en jeu que le vecteur de pointage D et la matrice de corrélation R, après une opération d'inversion qui peut être effectuée une fois pour toutes.

On peut ainsi obtenir par la seule variation de D, tout comme en traitement classique, un balayage de l'espace des directions explorées, sans qu'il soit nécessaire de recalculer dans chaque direction visée le vecteur de pondération optimale W.

Ce schéma est celui du minimum d'énergie de Capon tel que décrit, par exemple, dans "Special Issue on Acoustic Synthetic Aperture Processing, IEEE Ocean Engineering Trans" , Vol. 17 ,Jan 1992. Il est aussi proche de celui du maximum de vraisemblance, tel que décrit, par exemple, dans ... (citer la référence 5, car elle n'est pas mentionné dans la note) qui conduit à une énergie en sortie de réseau égale à :

$$e(h_i) = \; <(D^*R_b^{-1}D)^{-1}>$$

La matrice $R_b$ mise en jeu ici est la matrice de corrélation des bruits seuls, qui doit être évaluée en absence de la source, ce qui n'est pas toujours possible.

Cette méthode du minimum d'énergie a l'avantage de conserver le gain optimum du traitement conventionnel et donc de maximiser le rapport signal à bruit dans la direction de la cible. On lui reconnaît également des propriétés de haute résolution, mais il n'y a pas de bases théoriques indiquant que cette méthode soit la meilleure.

X représentant le vecteur des amplitudes complexes des signaux de l'antenne, la formation de voies consiste à construire une représentation du champ reçu sur l'antenne en fonction de la direction d'arrivée des ondes θ de la forme :

$$Y\,(\theta) = W{+}(\theta).X$$

le vecteur de formation de voies W (θ) satisfait la contrainte :

$$W{+}(\theta).d(\theta) = 1$$

d(θ) est un vecteur connu dont les composantes sont les amplitudes complexes des signaux induits sur les capteurs par une onde d'amplitude unité reçue dans la direction θ :

$$d(\theta)T = (d1, \ldots, di, \ldots, dN)$$

avec

$$d_i = \exp\left[ j\frac{2\pi\, u_\theta^T r_i}{\lambda} \right]$$

$u_\theta$ = vecteur unitaire dans la direction θ

$r_i$ = vecteur des coordonnées du capteur i

La formation de voie conventionnelle consiste à remettre en phase les signaux reçus sur l'antenne pour une direction particulière θ et à les sommer.

Le vecteur de formation de voies est alors :

$$W_C(\theta) = \frac{1}{N} d(\theta).$$

La formation de voies adaptatives vise à minimiser la puissance du signal reçu dans la voie, tout en assurant la contrainte (gain unité dans la direction de pointage de la voie).

Le vecteur de formation de voies adaptatives s'adapte ainsi aux caractéristiques du champ à observer ; ainsi il aura tendance à placer dans les directions des brouilleurs en dehors de la direction de la voie formée un gain faible, de manière à minimiser la puissance du signal.

Le vecteur de formation de voies adaptative est :

$$W_a(\theta) = \frac{\Gamma^{-1}.d(\theta)}{d^+(\theta).\Gamma^{-1}.d(\theta)}$$

Γ étant la matrice interspectrale des signaux de capteurs : Γ = E [X. X$^+$].

Les puissances moyennes des signaux de voies sont dans les cas des formations de voies conventionnelle et adaptative :

$$P_c(\theta) = \frac{1}{N^2} d^+(\theta).\Gamma.d(\theta)$$

$$P_a(\theta) = \frac{1}{d^+(\theta).\Gamma^{-1}.d(\theta)}$$

L'extraction de la phase du signal résultant du traitement adaptatif 609 est réalisée simplement par extraction de la phase du signal complexe de sortie par calcul de l'arctangente du signal complexe démodulé.

**Revendications**

1. Dispositif d'antenne à ouverture synthétique de réception de signaux comprenant une porteuse et des moyens de détermination de sa trajectoire (301), **caractérisé en ce qu'**il comprend, pour chaque signal respectivement associé à une direction spatiale, des moyens de traitement adaptés pour générer un signal à phase stationnaire sur une fenêtre temporelle correspondant à la distance parcourue par le dispositif pendant la durée d'intégration cohérente, après démodulation dudit signal reçu, lesdits moyens de traitement comprenant des moyens de correction (306, 307, 308, 309, 313) adaptés pour corriger la phase de porteuse dudit signal.

2. Dispositif selon la revendication 1, adapté pour recevoir des signaux d'un système de navigation par satellites

3. Dispositif selon la revendication 2, dans lequel lesdits moyens de correction comprennent, pour corriger la phase de porteuse dudit signal en phase d'acquisition ou en phase de poursuite :

   - des premiers moyens de détermination (306) d'un vecteur vitesse de déplacement du dispositif ;
   - des moyens de projection orthogonale (307) dudit vecteur vitesse de déplacement du dispositif dans la direction dudit signal ;
   - un premier oscillateur à commande numérique (308) recevant en entrée le ladite projection orthogonale ;

- un multiplicateur (309) pour multiplier le signal délivré par ledit premier oscillateur à commande numérique et les composantes de bases complexes du signal reçu, obtenues après démodulation de la phase de porteuse ; et
- des premiers moyens d'intégration (303) cohérente du signal délivré par ledit multiplicateur sur un intervalle de temps d'une durée T inférieure au temps de parcours par l'antenne de 100 longueurs d'onde de la fréquence de porteuse, et inférieure à un maximum de 10 seconde.

4. Dispositif selon l'une des revendications 1 à 3, dans lequel le signal comprenant une phase de sous-porteuse, lesdits moyens de correction sont, en outre adaptés pour corriger la phase de sous-porteuse dudit signal.

5. Dispositif selon la revendication 4, dans lequel, la phase de sous porteuse comprenant une modulation des codes d'étalement de type BOC, lesdits moyens de correction comprennent :

   - des moyens de démodulation complexe (501) de la phase de sous-porteuse
   - des deuxièmes moyens d'intégration courte (504) du signal délivré par lesdits moyens de démodulation complexe (501) servant à la mesure de la phase de porteuse ;
   - des deuxièmes moyens de détermination (506) d'une référence de trajectoire dudit dispositif pour déterminer l'évolution de la phase du signal reçu correspondant au seul déplacement dudit dispositif ;
   - des moyens d'estimation (507) du déplacement relatif du dispositif correspondant à la projection de la vitesse de déplacement du porteur dans la direction du signal reçu à partir de ladite référence de trajectoire dudit dispositif ;
   - des premiers moyens de calcul (508) d'une correction de phase de sous-porteuse du signal correspondant au déplacement relatif du porteur, asservi en temps sur le temps reçu ;
   - des premiers moyens de multiplication (505) pour effectuer la multiplication complexe du signal de sortie desdits deuxièmes moyens d'intégration courte (504) et desdits premiers moyens de calcul (508) de correction de phase de sous-porteuse ; et
   - des troisièmes moyens d'intégration longue (509) du signal délivré par lesdits deuxièmes moyens d'intégration courte (504) servant à la mesure de la phase de sous-porteuse ;
   - des moyens de mesure (510) de la phase de sous-porteuse.

6. Dispositif selon la revendication 5, dans lequel lesdits moyens de démodulation complexe (501) de la phase de sous-porteuse comprennent :

   - un deuxième oscillateur à commande numérique (311) pour générer le code de type BOC local asservi en temps sur le temps reçu ;
   - des deuxièmes moyens de multiplication (502, 503) pour effectuer la multiplication complexe du signal reçu et du code de type BOC généré.

7. Dispositif selon la revendication 4, dans lequel, la phase de sous porteuse comprenant une modulation des codes d'étalement de type BOC, lesdits moyens de correction comprennent :

   - des moyens de démodulation complexe (501) de la phase de sous-porteuse
   - des deuxièmes moyens d'intégration courte (504) du signal délivré par ledit multiplicateur (501) servant à la mesure de la phase de porteuse ;
   - des deuxièmes moyens de détermination (506) d'une référence de trajectoire dudit dispositif pour déterminer l'évolution de la phase du signal reçu correspondant au seul déplacement dudit dispositif ;
   - des moyens d'estimation (507) du déplacement relatif du dispositif correspondant à la projection de la vitesse de déplacement du porteur dans la direction du signal reçu à partir de ladite référence de trajectoire dudit dispositif ;
   - des premiers moyens de calcul (508) d'une correction de phase de sous-porteuse du signal correspondant au déplacement relatif du porteur, asservi en temps sur le temps reçu ;
   - des troisièmes moyens de multiplication (505) des signaux délivrés en sortie des deuxièmes moyens d'intégration courte (504) et des premiers moyens de calcul (508) ;
   - des moyens de traitement adaptatif spatial (611) pour effectuer un filtrage temporel du signal complexe démodulé, délivré en sortie desdits troisièmes moyens de multiplication (505), à partir desdites pondérations et de ladite mesure de phase de sous-porteuse ; et
   - des deuxièmes moyens de calcul (610) de coefficients de pondération desdits moyens de traitement adaptatif spatial (611), appliqués (dans 611) à partir du signal délivré en sortie desdits troisièmes moyens de multiplication (505) ;

**EP 2 410 352 A1**

- des moyens de mesure (510) de la phase de sous-porteuse du signal de sortie desdits moyens de traitement adaptatif spatial (611).

8. Procédé de réception par antenne à ouverture synthétique de signaux comprenant une porteuse et des moyens de détermination de sa trajectoire, dans lequel, pour chaque signal respectivement associé à une direction spatiale, on effectue un traitement adapté pour générer un signal à phase stationnaire sur une fenêtre temporelle correspondant à la distance parcourue par le dispositif pendant la durée d'intégration cohérente, après démodulation dudit signal reçu, ledit traitement comprenant une correction de la phase de porteuse dudit signal.

9. Procédé selon la revendication 8, dans lequel ladite correction de la phase de porteuse dudit signal comprend, en phase d'acquisition ou en phase de poursuite :

   - une détermination d'un vecteur vitesse de déplacement de ladite antenne ;
   - une projection orthogonale dudit vecteur vitesse de déplacement dans la direction dudit signal ;
   - une génération d'un signal de correction de la phase de la porteuse réalisée par un oscillateur numérique commandé en phase à partir de la vitesse de déplacement de l'antenne dans la direction du signal ;
   - une multiplication dudit signal corrigé et du signal reçu en composantes de bases complexes, obtenu après démodulation de la phase de porteuse ; et
   - une intégration cohérente du résultat de ladite multiplication sur un intervalle de temps d'une durée T inférieure au temps de parcours par l'antenne de 100 longueurs d'onde de la fréquence de porteuse, et inférieure à un maximum de 10 seconde.

10. Procédé selon la revendication 8 ou 9, dans lequel, le signal comprenant une phase de sous-porteuse, ladite correction est, en outre, adaptée pour corriger la phase de sous-porteuse dudit signal.

Directivité
induite

Antenne apparente
créée par sommation
cohérente des I et Q

Réjection « spatiale »
des interférences de
même fréquence

## FIG.1

204
NCO code → Retard code

207
Filtre de
boucle code

206
Discriminateur
de retard code

208
Discriminateur de
phase porteuse

209
Filtre de
boucle porteuse

201
S(t)

203

205
∫T

202
NCO porteuse → Phase porteuse

## FIG.2

Trajectoire porteur et éphéméride ou Retard trajet direct

301 — Détermination domaines de recherche des retards et doppler

302 — Exploration doppler

Hypothèse doppler

303 — NCO Porteuse (hypothèse Doppler)

304

S(t)

310 — Exploration retard

Hypothèse retard code

311 — NCO code

312

313 — $\int_T$ — Intégration cohérente

314 — $()^2$

315 — $\sum_N$ — Intégration non cohérente

Puissance détectée

309

308 — NCO correction Phase porteuse

307 — Compensation de phase dans la direction visée

Direction visée

306 — Référence trajectoire porteur

Vitesse porteur

305 — Synchro temps de mesures

Réinitialisation date origine phase (synchrone intégration cohérente)

FIG.3

22

FIG.4

FIG.5

EP 2 410 352 A1

FIG.6

**EP 2 410 352 A1**

Europäisches
Patentamt

European
Patent Office

Office européen
des brevets

# RAPPORT DE RECHERCHE EUROPEENNE

Numéro de la demande

EP 11 17 1967

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | LIN T; BROUMANDAN A; NIELSEN J; O'DRISCOLL C; LACHAPELLE G:  "Robust beamforming for GNSS synthetic antenna arrays", 22ND INTERNATIONAL TECHNICAL MEETING OF THE SATELLITE DIVISION OF THE INSTITUTE OF NAVIGATION 2009, ION GNSS 2009, vol. 5, 25 septembre 2009 (2009-09-25), - 25 septembre 2009 (2009-09-25), pages 387-401, XP002634298, USA ISBN: 978-1-61567-748-1 | 1,2,4,8, 10 | INV. G01S19/22 G01S19/21 G01S19/37 G01S19/26 |
| A | * abrégé; figure 3 * * page 388 - page 392 * ----- | 3,5-7,9 | |
| A | SOLOVIEV A; VAN GRAAS F; MILLER M: "Synthetic aperture GPS signal processing: Concept and feasibility demonstration", PROCEEDINGS OF THE INSTITUTE OF NAVIGATION, NATIONAL TECHNICAL MEETING - INSTITUTE OF NAVIGATION - INTERNATIONAL TECHNICAL MEETING, ITM 2009, vol. 2, 28 janvier 2009 (2009-01-28), - 28 janvier 2009 (2009-01-28), pages 851-863, XP002634299, USA * le document en entier * ----- -/-- | 1-10 | DOMAINES TECHNIQUES RECHERCHES (IPC) G01S H04B |

Le présent rapport a été établi pour toutes les revendications

| Lieu de la recherche | Date d'achèvement de la recherche | Examinateur |
|---|---|---|
| La Haye | 19 août 2011 | Vial, Antoine |

EPO FORM 1503 03.82 (P04C02)

Europäisches
Patentamt

European
Patent Office

Office européen
des brevets

# RAPPORT DE RECHERCHE EUROPEENNE

Numéro de la demande

EP 11 17 1967

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | DRAGANOV S; HARLACHER M; HAAS L: "Multipath mitigation via synthetic aperture beamforming", 22ND INTERNATIONAL TECHNICAL MEETING OF THE SATELLITE DIVISION OF THE INSTITUTE OF NAVIGATION 2009, ION GNSS 2009, vol. 1, 25 septembre 2009 (2009-09-25), - 25 septembre 2009 (2009-09-25), pages 1707-1715, XP002634300, USA ISBN: 978-1-61567-748-1 * le document en entier * ----- | 1-10 | |
| A | US 6 775 520 B2 (SUBOTIC NIKOLA [US] ET AL) 10 août 2004 (2004-08-10) * abrégé; figures 1,2 * ----- | 1-10 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| La Haye | 19 août 2011 | Vial, Antoine |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 17 1967

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-08-2011

| Document brevet cité au rapport de recherche | Date de publication | Membre(s) de la famille de brevet(s) | Date de publication |
|---|---|---|---|
| US 6775520 B2 | 10-08-2004 | US 2003142001 A1 | 31-07-2003 |

EPO FORM P0460

Pour tout renseignement concernant cette annexe : voir Journal Officiel de l'Office européen des brevets, No.12/82

## RÉFÉRENCES CITÉES DANS LA DESCRIPTION

### Littérature non-brevet citée dans la description

- **L. KOPP.** Communication with parametric array. *IEEE Trans, Ocean Engineer,* Janvier 2000
- **RADAR ; SONAR ; C.A. WILEY.** Synthetic Aperture Radars - a paradigm for technology evolution. *IEEE AES-21 Trans,* 1985, 440-443
- **L.J.CUTRONA.** Comparison of sonar system performance achievable using synthetic aperture techniques with the performance achievable by more conventional means. *Journal of the Acoustic Society of America,* 1975, vol. 58 (2), 336-348
- Special Issue on Acoustic Synthetic Aperture Processing. *IEEE Ocean Engineering Trans.,* Janvier 1992, vol. 17
- Special Issue on Acoustic Synthetic Aperture Processing. *IEEE Ocean Engineering Trans,* Janvier 1992, vol. 17